# EUROPEAN PATENT SPECIFICATION

(11) **EP 1 131 372 B1**
(45) Date of publication and mention of the grant of the patent: **14.06.2006**
(21) Application number: 99952665.0
(22) Date of filing: 19.10.1999
(51) Int. Cl.: C08G 63/54, C08L 67/06

(54) **UNSATURATED POLYESTER RESINS**
UNGESÄTTIGTE POLYESTERHARZE
RESINES DE POLYESTER INSATURE

(30) Priority: 19.10.1998 FI 982256
(43) Date of publication of application: 12.09.2001
(73) Proprietor: Ashland Inc., Covington, Kentucky 41012-0391 (US)
(72) Inventor: KEINÄNEN, Kari, FIN-06100 Porvoo (FI); WIGINGTON, Glenn, Fort Smith, AR 72908 (US)
(74) Representative: Hakkila, Maini Annika
(86) International application number: PCT/FI1999/000866
(87) International publication number: WO 2000/023495

(56) References cited:
- EP-A2- 0 400 884
- EP-A2- 0 475 661
- EP-A2- 0 722 995
- US-A- 3 466 264
- US-A- 3 533 999
- US-A- 4 294 748
- US-A- 4 921 883
- US-A- 5 510 453
- US-A- 5 614 299
- US-A- 5 688 867
- US-A- 5 874 503
- DATABASE WPI Week 199101, Derwent Publications Ltd., London, GB; AN 1991-003821, XP002948065 & JP 2 281 019 A (CHISSO CORP.) 16 November 1990 & PATENT ABSTRACTS OF JAPAN & JP 2 281 019 A 16 November 1990

## Description

The invention relates to modified unsaturated polyester resins with a high molecular weight, a low viscosity and high solubility especially in reactive diluents. The invention also relates to a method for the manufacture of such unsaturated polyester resins and to the use thereof.

Unsaturated polyesters are polymers having structural units linked by ester groupings, and they can be manufactured by the condensation of carboxylic acids with polyhydric alcohols. Low molecular weight unsaturated polyesters are usually produced from maleic anhydride with diethylene glycol or, alternatively, other carboxylic acids or anhydrides such as fumaric acid, and glycols such as propylene glycol are used. Typically, the obtained unsaturated polyesters are in the form of a rather viscous oil. Low molecular weight unsaturated polyesters will crosslink in the presence of a peroxide by copolymerization with reactive diluents. Unsaturated polyester resins typically contain volatile unsaturated organic monomers such as styrene as the reactive diluent. In commercially available unsaturated polyester resin applications, up to 50 % of styrene or other vinyl monomers are used. During curing, some of the organic monomer is usually lost in the atmosphere, 10-20.% of the total amount of the monomer may be lost during resin spray-up and lamination and 30-50 % during gelcoat spraying and thus these emissions cause occupational safety hazards and are also a problem because of environmental considerations. In most countries legislation introduced in recent years requires a reduction in the amount of volatile organic compounds (VOC) which may be released to the atmosphere. Several methods have been proposed for reducing VOC emissions, for example the replacement of the reactive diluent with a less volatile reactive diluent. This approach has led to slower curing times and/or incomplete curing at normal ambient temperatures. Another approach is a reduction in the amount of the reactive diluent in the composition. This approach has led to an increase in the viscosity of the resin beyond useable values. If the viscosity increase is compensated for by the use of a lower molecular weight polyester then poor final product properties will result. Still another approach has been the use of a suppressant which reduces the loss of VOCs. The suppressants are often waxes which may lead to a reduction in the interlaminar adhesion of laminating layers. On the other hand, requirements for the mechanical properties and for the quality of polyester resins and of their applications are constantly tightening, which can be seen especially in the field of marine applications. Thus, there is a clear need for polyester resins and their applications with low reactive diluent emissions and with superior properties and quality.

An unsaturated polyester resin is presented in *DE 25 27 675* wherein the polyester resin comprises an α,β-ethylenically unsaturated polyester, the terminal groups of which comprise a high amount of residues of monoalcohols and a copolymerizable monomer. High amounts of monoalcohols yield rather expensive polymers with shorter molecular chains and poor mechanical properties. Additionally, the use of maleic anhydride as the sole source for a carboxylic acid derivative leads to resins with inferior chemical resistance and mechanical properties.

European patent publication *EP 0 475 661* relates to unsaturated polyester resins which have improved hydrolytic stability and low molecular weights (Mw) of about 300 to 2500, and which are chain-stopped or endcapped with monofunctional alcohols or acids. The chain-stopped resins can be modified by addition of polyisocyanate and hydroxy acrylate to prepare resins for artificial marble, artificial onyx, fiber glass reinforced products, laminates, sheet moulding compounds and resin transfer moulding applications. Alternatively, the resins can also be modified by adding a polyisocyanate, a hydroxy acrylate and a dicyclopentadiene based unsaturated polyester resin to produce a composition suitable for low profile marine applications. These unsaturated polyesters are prepared by the condensation of dicarboxylic acids or anhydrides with polyhydric alcohols in the presence of chain-stopping monofunctional acids or alcohols.

*US 5 688 867* describes a polyester resin comprising from about 5 wt% to about 50 wt% of a reactive diluent and from about 50 wt% to about 95 wt% of an unsaturated polyester resin prepared from at least one component selected from a group consisting of from about 0.5 mol % up to about 8 mol % of polyhydric alcohol having at least three hydroxyl groups, and at least one transesterification catalyst, from about 2 mol% up to about 12 mol% of a reaction product of a polyol and a fatty carboxylic acid, and from about 2 mol% up to about 12 mol% of a fatty reactant selected from the group consisting of a fatty primary alcohol, a fatty epoxide, a fatty monocarboxylic acid and mixtures thereof, wherein each member of the group has up to about 100 carbon atoms. The invention also relates to mixtures of polyester resins with conventional polyester resins. This invention provides resins and methods which have a low emission of volatile organic compounds.

US 4,921,883 discloses coating compositions cured by UV radiation, useful as lacquers for wood, such as furniture, paper, plastic foil and cardboard, Said coating compositions are based on unsaturated polyester resins consisting of 0.2 to 0.4 mol of norbomene dicarboxylic acid groups, in addition to 0.6 to 0.8 mol of maleic and/or fumaric acid groups, 0.6 to 0.8 mol of ethylene- and/or propylene glycol groups, 0.2 to 0.4 mol of diethylene glycol groups, 0.1 to 0.2 mol of benzyl alcohol and/or benzoic acid groups and 0 to 0.2 mol of other alcohol groups.

An object of the present invention is to provide unsaturated polyester resins which have a high molecular weight, a low viscosity and which are readily soluble in reactive diluents. Another object of the present invention is to provide unsaturated polyester resins for applications such as general purpose resins and gelcoats with reduced volatile organic compound emissions in order to reduce the risk of occupational safety hazards and environmental concerns. Additionally methods for the manufacture of such unsaturated polyester resins and unsaturated polyester systems including products and applications, with good physical properties such as acceptable mechanical strength, weathering resistance and with good final product properties are desired.

Characteristic features of the unsaturated polyester resins, of the manufacture thereof and of the use according to the invention are stated in the claims.

It has been found that the above-mentioned objects can be reached with the following solution. In accordance with the present invention unsaturated polyester resins are prepared by condensation of at least two unsaturated carboxylic acids or derivatives thereof and at least one of them is an unsaturated aromatic carboxylic acid or a derivative thereof, with at least two diols and at least one of them is an aliphatic branched diol, in the presence of at least one monoalcohol, and the obtained unsaturated polyester or mixtures of unsaturated polyesters are diluted in a reactive diluent or in mixtures of reactive diluents. Optionally one or more carboxylic acids and one or more polyhydric alcohols having at least three hydroxyl groups may also be used as well as one or more modifying chemicals. The specific combination of starting materials i.e. part of the unsaturated carboxylic acids are of aromatic nature, part of the alcohols are certain aliphatic branched diols, used with combination of a monoalcohol(s), yields the cured products the desired properties.

Suitably unsaturated carboxylic acids or derivatives thereof, such as maleic acid, maleic anhydride and fumaric acid and the like are used. Preferably the unsaturated aromatic carboxylic acid or a derivative thereof is phthalic acid, phthalic anhydride, terephthalic acid, isophthalic acid, tetrahydrophthalic anhydride, hexahydrophthalic acid or hexahydrophthalic anhydride. Suitable other carboxylic acids are adipic acid, trimellitic acid, trimellitic anhydride, dimethylmalonic acid, hydroxypivalic acid, 1,4-cyclohexanedicarboxylic acid. Unsaturated aromatic and other carboxylic acids or mixtures thereof are used in a total amount of 30-70 mol% and preferably 40-60 mol %.

Suitable diols are such as ethylene glycol, propylene glycol, diethylene glycol, dipropylene glycol, neopentyl glycol, triethylene glycol, tripropylene glycol, cyclo-hexane dimethanol, hexane diol, butylene glycol, bydroxypivalyl hydroxy pivalate, 2-ethyl-1,3-hexanediol, 1,3-propanediol, 1,5-pentanediol, 2,2-diethyl-1,3-propanediol, propylene glycol, 1,2,3-proganetriol polymer with methyl oxirane, trimethylolpropane polymer with methyl oxirane, 2-methyl-1,3-propanediol and 2-methyl-2,4-pentanediol. Preferable aliphatic branched diols are 2.2,4-trimethyl-1,3-pentanediol and 2-butyl-2-ethyl-1,3-propanediol, which are used in an amount of 0.5-8 mol%, preferably 2-6 mol%. The diols or mixtures thereof are used in a total amount of 30-70 mol% and preferably 40-60 mol%. The amount of 40-60 mol% is especially suited for applications requiring extremely good weather tolerance in demanding conditions such as in gelcoats for marine applications.

Optionally, polyhydric alcohols having at least three hydroxyl groups, such as trimethylol propane, trimethylol ethane, pentane erythritol, glycerine, and the like and mixtures thereof may be used in amounts of 0.5-20 mol% and preferably 1-10 mol%, the amount depending on the desired properties of the application. The excess of 4-25 mol% of total alcohols is suitable and preferably an excess of 5-20 mol % is used.

Monoalcohols are used as endcappers and suitable ones are benzyl alcohol, phenylethanol, cyclohexanol, 2-ethylhexanol, 2-cyclohexyl ethanol, 2,2-dimethyl-1-propanol and layryl alcohol, which are used in an amount of 0.5-10 mol%, preferably 2-6 mol%.

The optional modifying chemicals include monofunctional acids, such as benzoic acid, lauric acid, 2-ethylbuturic acid, 2-ethylhexanoic acid and phenylacetic acid, and glycidyl ester of neodecanoic acid, epoxystyrene and dicyclopentadiene. Monoalcohols and optional modifying chemicals or mixtures thereof are used in a total amount of 0.5-20 mol% and preferably 4-15 mol%.

The molar ratio of aliphatic branched diols to monoalcohols is 5:1-1:5 and preferably 2:1-1:2.

The reactive diluent is preferably an ethylenically unsaturated, monomeric compound, which compound includes allyl and vinyl compounds conventionally used for the preparation of unsaturated polyester based moldings, impregnating and coating compositions. Examples of reactive diluents include styrene, substituted styrenes, such as methoxystyrene, divinylbenzene, 4-ethylstyrene, 4-methylstyrene, 4-t-butylstyrene, p-chlorostyrene or vinyltoluene, esters of acrylic acid and methacrylic acid with alcohols or polyols, such as methyl methacrylate, butyl acrylate, ethylhexyl acrylate, hydroxpropyl methacrylate, lauryl acrylate, stearyl methacrylate, lauryl methacrylate, butanediol diacrylate, ethyleneglycol dimethacrylate, di-ethyleneglycol dimethacrylate, triethyleneglycol dimethacrylate, propyleneglycol dimethacrylate, dipropyleneglycol dimethacrylate, tripropyleneglycol dimethacrylate and trimethylolpropane triacrylate, allyl esters, such as diallyl phthalate, and vinyl esters, such as vinyl ethylbexanoate, vinyl pivalate, limonene, dipentene, vinyl ethers, indene, allyl benzene, and the like and mixtures thereof. Preferred reactive diluents are styrene, α-methylstyrene, vinyltoluene, divinylbenzene, methyl methacrylate, hydroxpropyl methacrylate, ethyleneglycol dimethacrylate, diethyleneglycol dimethacrylate, triethyleneglycol dimethacrylate and mixtures of volatile diluents with less volatile diluents such as mixtures of styrene or derivatives thereof with said methacrylates. The amount of the reactive diluent or mixtures thereof varies between 15 and 50 wt%, preferably between 20 and 35 wt%.

Preferable starting materials for the manufacture of resins especially suited for marine applications comprise phthalic anhydride, isophthalic acid, tetrahydrophthalic anhydride and hexahydrophthalic anhydride as aromatic unsaturated carboxylic acids or derivatives thereof. Maleic anhydride is a suitable unsaturated carboxylic acid or a derivative thereof, 1,4-cyclohexanedicarboxylic acid and adipic acid are suitable as other carboxylic acids or derivatives thereof. 2,2,4-trimethyl-1,3-pentanediol and 2-butyl-2-ethyl-1,3-propanediol are suitable aliphatic branched diols. Propylene glycol, dipropylene glycol, diethylene glycol, neopentyl glycol, cyclohexane dimethanol, hexanediol, hydroxypivalyl hybroxypivalate, 1,5-pentanediol, 1,3-propanediol, 2-ethyl-1,3-hexanediol, 2,2-diethyl-1,3-propanediol, 2-methyl-1,3-propanediol, 2-methyl-2,4-pentanediol, polypropylene glycol, 1,2,3-propanetriol polymer with methyl oxirane and trimethylolpropane polymer with methyl oxirane are suitable as other diols. Trimethylol propane is suitable as an optional polyhydric alcohol. As a monoalcohol benzyl alcohol, phenyl ethanol, cyclohexanol, 2-cyclohexylethanol, 2-ethylhexanol, 2,2-dimethyl-l-propanol are suitable. Glycidyl ester of neodecanoic acid, epoxystyrene, benzoic acid, phenylacetic acid are suitable as optional modifying chemicals.

Preferable starting materials for the manufacture of resins especially suited for general purpose resins and gelcoats comprise phthalic anhydride, isophthalic acid, tetrahydrophthalic anhydride and terephthalic acid as aromatic unsaturared carboxylic acids or a derivative thereof. Maleic anhydride is a suitable unsaturated carboxylic acid or a derivative thereof, trimellitic acid, dimethylmalonic acid and hydroxy-pivalic acid are suitable as other unsaturated carboxylic acids or derivatives thereof, 2,2,4-trimethyl-1,3-pentanediol and 2-butyl-2-ethyl-1,3-propanediol are used as aliphatic branched diols. Propylene glycol, dipropylene glycol, ethylene glycol, diethylene glycol, triethylene glycol, tripropyleneglycol, neopentyl glycol, hexanediol, butylene glycol, hydroxypivalyl hybroxypivalate, 1,5-pentanediol, hexanediol, 1,3-propanediol, 2-methyl-1,3-propanediol, 2-methyl-2,4-pentanediol, polypropylene glycol, 1,2,3-propanetriol polymer with methyloxirane and trimethylolpropane polymer with methyl oxirane are suitable as other diols and trimethylol propane, trimethylol ethane, pentane erythritol and glycerine are suitable as optional polyhydric alcohols. Benzyl alcohol, 2-ethyl-hexanol, 2,2-dimethyl-1-propanol and layryl alcohol are suitable as monoalcohols and benzoic acid, 2-ethylhexanoic acid, lauric acid, phenyl acetic acid and dicyclopentadiene may be used as optional modifying chemicals.

General purpose resins and gelcoats are suitable for applications such as fiber glass reinforced products, artificial marble, artificial onyx, sheet moulding compounds, resin transfer moulding applications, hand and spray lamination applications, sanitary applications, pigmented and clear gelcoats and topcoats/enamels.

The unsaturated polyester resin according to the invention comprises 20-85 wt%, preferably 30-80 wt% of at least one unsaturated polyester having a weight average molecular weight of 2000-6000, preferably 2600-6000, prepared from
1) 30-70 mol%, preferably 40-60 mol% of at least two unsaturated carboxylic acids or derivatives thereof and at least one of them is an unsaturated aromatic carboxylic acid or a derivative thereof, and optionally of a carbxylic acid or a derivative thereof;
2) 30-70 mol %, preferably 40-60 mol % of at least two diols and at least one of them is an aliphatic branched diol, preferably 2,2,4-trimethyl-1,3-pentanediol and/or 2-butyl-2-ethyl-1.3-propanediol and the amount of the aliphatic branched diol/diols is 0.5-8 mol%, preferably 2-6 mol%.
3) 0.5-10 mol%, preferably 2-6 mol % of at least one monoalcohol,
4) optionally a modifying chemical/chemicals and the total amount of monoalcohols and modifying chemicals is 0.5-20 mol%, preferably 1-15 mol%;
5) optionally 0.5-20 mol% , preferably 1-10 mol% of a polyhydric alcohol/alcohols having at least three hydroxyl groups
and 15-50 wt%, preferably 20-35 wt% of at least one reactive diluent.

Additionally an esterification catalyst for decreasing of reaction time may optionally be used in the manufacture of the linear unsaturated polyesters. The catalyst may be present in an amount known to a man skilled in the art. Suitable esterification catalyst include metal-containing catalysts, such as metal oxides, metal hydroxides and metal acetates. The progress of the polymerization reaction is conventionally monitored by means of acid number.

Suitable and preferred alternatives for the components in the resins according to the invention are-listed above.

The unsaturated polyesters according to the invention can be prepared in a single-stage or in a two-stage process. A solvent process wherein an azeotropic solvent, such as xylene is used to facilitate water removal is also suitable. The unsaturated polyester resins according to the invention are preferably manufactured in the following manner. The alcohols and carboxylic acids or derivatives thereof are charged to a suitable reaction vessel and the reaction is carried out at a temperature of about 180-240 °C, preferably 190-230 °C and it is continued until an acid number of 1-50, preferably 3-20 and an I.C.I. (cone and plate) viscosity of 1-10 Pas/125 °C, preferably 3-8 Pas/125 °C of the linear unsaturated polyester are reached. Finally the linear unsaturated polyester or mixtures of linear unsaturated polyesters are dissolved in a suitable reactive diluent or a mixture thereof. In the case maleic anhydride and isophthalic acid or terephthalic acid are used, all acids except maleic anhydride are charged with alcohols. The reaction is then allowed to proceed until the reaction mixture is clear, and the acid number is below 70, more preferably below 30. After cooling the maleic anhydride is added. The encapper, monohydric alcohol can be added at the first or the second stage. Components or additives generally known in the art may be employed in the process.

The unsaturated polyesters according to the invention exhibit acid numbers from 1 to 50, based on solids or nonvolatile content, and preferably the acid number is 3-20. The I.C.I viscosity of the linear unsaturated polyester is between 1-10 Pas/125 °C, preferably 3-8 Pas/125 °C, the weight average molecular weight Mw of the linear unsaturated polyester is 2000-6000, preferably 2600-b000 and the number average molecular weight Mn is 700-2500, preferably 1000-2200. Regardless of the longer chain length and higher molecular weight, the viscosity remains low and the solubility of the unsaturated polyester in reactive diluents such as styrene is good, which significantly reduces the need for reactive diluents, down to 20-35 wt%. Because of their solubility and viscosity properties, the unsaturated polyesters can be dissolved in smaller amounts of reactive diluents, and thus the emission of VOCs from the products manufactured from the resins according to the invention are significantly lower. The low styrene content in the resin results also in a more efficient material transfer and less loss of the product in applications because the product is less atomized. Mostly due to the higher molecular weight of the unsaturated polyester, the cured unsaturated polyester resins retain the mechanical properties such as weathering resistance, chemical resistance and UV-resistance and thus they are well suited especially for demanding applications. The unsaturated polyesters according to the invention are compatible and readily soluble in reactive diluents, such as styrene and the respective resins have good curing properties. Polyester derived products with superior surface quality, thermocycling and UV resistance and clarity are conveniently manufactured from the unsaturated polyester resins according to the invention.

The unsaturated polyester resins according to the invention are useful for a wariety of applications such as general purpose resins, coating materials and reinforcing materials. They have utility as resins with reduced reactive diluent emissions for panels, laminates, fiber glass reinforced products, artificial marble, artificial onyx, sheet moulding compounds, resin transfer moulding applications, sanitary applications and as base resins, they are also well suited for demanding marine applications, and products such as pigmented or clear gelcoats and topcoats/enamels can be manufactured which meet the requirements described above.

The resins for marine applications have very tight requirements and Det Norske Veritas (DNV) approval and Lloyd's approval are required in several countries for polyester resins used for marine purposes. DNV requirements for mechanical properties of resins used in gelcoats for marine applications (Tentative Rules for Certification and Classification of Boats, Part 7 Chapter 1, Approval of Raw Materials, December 1997) are presented in the following:
- Tensile strength ≥ 50 MPa.
- Tensile modulus ≥ 3000 MPa.
- Bending temperature (HDT) ≥ 70 °C.
- Water absorption ≤ 80 mg/piece/28 d.
- Barcol hardness ≥ 35.

The unsaturated polyester resins according to the invention may be formulated together with suitable additives known in the art to form gelcoats, resins and polyester based products.

Gelcoats are curable compositions which contain at least one of the above unsaturated polyester resins with additives; Suitable additives include thixotropic agents, thixotropy enhancers, suppressants, surface tension agents, co-promoters, promoters, air release agents, fillers, wetting agents, levelling agents and pigments.

The thixotropic agents comprise silica compounds such as fumed silica and precipitated silica and inorganic clays like bentonite and hectorite clay. Thixotropy enhancers comprise propyle glycol and ethylene glycol and derivatives thereof. Promoters are usually added to unsaturated polyester resins to accelerate the decomposition of a peroxide initiator into free radicals and to thereby initiate or speed up the curing of the composition. The promoters are generally metal compounds, such as cobalt, manganese, iron, vanadium, copper, and aluminum salts of organic acids, such as octoate or naphthenate salts. Co-promoters are widely used in promoter systems and suitable ones are organic amines like dimethylaniline, diethylaniline, 2-aminopyridine, N,N-dimethyl-acetoacetamide, acetoacetanilide or other organic compounds like ethyl acetoacetate, methyl acetoacetate and N,N-dimethyl-p-toluidine. Inhibitors are used for adjusting storage stability and gel time, and suitable inhibitors comprise hydroquinone, toluhydroquinone, mono-tert-butylhydroquinone, hydroquinone monomethyl ether p-benzoquinone, 2,5-di-tert-butylhydroquinone. Gelcoats may also contain fillers such as talc, calcium carbonate, magnesium carbonate, barium carbonate, aluminium trihydroxide, calsium sulfate, magnesium sulfate, barium sulfate, chopped glassfiber and the like. Various pigments are typically used in gelcoats and titanium dioxide is a suitable one. Air release agents, wetting additives, surfactants or levelling additives based on silicone and fluorocarbon, and various modified polymers like acrylate and urethane may be added to gelcoats. Suppressants for reducing organic emissions may be included in gelcoats and such as polyethers, alcanoic acid esters of propoxylated phenols, propoxylated bisphenols or hydoxypropylphthalates, polyetherpolysiloxane blockcopolymers, waxes and-the like are suitable. Various peroxides for curing/crosslinking are used and peroxides like methyl ethyl ketone peroxide, cumene hydroperoxide, t-butyl peroctoate, di-t-butyl peroxide, benzoyl peroxide and the like are suitable.

The unsaturated polyester resins and applications based thereon are well suited for hand lay up lamination, spray lamination, resin lamination, pultrusion, sheet moulding compounding, bulk moulding compounding and applications well known to the man skilled in the art. The obtained products achieve to reduced volatile organic compound emissions, they have acceptable geltime, good adhesion, weathering resinstance, low water absorption and good final product properties. The UV-resistance, low shrinkage properties and hydrolytic stability of the products are good due to the lower reactive diluent content and due to other properties of the resins.

Following examples provide a better understanding of the present invention, how ever they are not be intended as limiting the scope thereof.

### EXAMPLE 1 General purpose resins 1A, 1B, 1C and 1D

| **Resin** | | | | |
|---|---|---|---|---|
| **Starting material (mol%)** | **1A** | **1B** | **1C** | **1D** |
| Propylene glycol | 12 | 12 | 12 | 10 |
| Neopentyl glycol | 33 | 33 | 33 | 33 |
| 2-Butyl-2-ethyl-1,3-propanediol | 4 | 5 | 4 | 5 |
| 1,4-Cyclohexanedicarboxylic acid | | | 4 | |
| Isophthalic acid | 15 | 14 | 14 | 14 |
| Adipic acid | 3 | 3 | | 3 |
| Maleic anhydride | 28 | 28 | 28 | 27 |
| 2-Ethythexanoic acid | | 2 | | 4 |
| 2-Phenylethyl alcohol | | | | 4 |
| Benzyl alcohol | | 3 | 5 | |
| 2-Ethylhexanol | 5 | | | |

| **Property of linear unsaturated polyester:** | | | | |
|---|---|---|---|---|
| Cook end points: I.C.I./150 °C * (Pas) | 1.3 | 1.7 | 1.4 | 0.8 |
| Acid number | 12 | 15 | 19 | 20 |

| **Property of linear unsaturated polyester in styrene:** | | | | |
|---|---|---|---|---|
| I.C.I./25 °C (Pas) | | 3.8 | 3 | 3.5 |
| Styrene % | | 30 | 35 | 35 |
| Mw | 3200 | 3000 | 2800 | 3100 |
| Mn | 1700 | 1100 | 1600 | 1600 |

| **Mechanical properties of cured resin in styrene** | | | | |
|---|---|---|---|---|
| Tensile strength (MPa) | | 40 | 65 | 40 |
| Tensile elongation (%) | | 3 | 7 | 6 |
| Tensile modulus (MPa) | | 2600 | 3200 | 1950 |
| HDT (°C) | | 59 | 57 | 50 |
| Barcol | | 33 | 36 | 22 |

| | | | | |
|---|---|---|---|---|
| * I.C.I, viscosity was measured at 150°C yielding lower values when compared with 125 °C | | | | |

### EXAMPLE 2 General purpose resins 2A, 2B, 2C and 2D

| **Resin** | | | | |
|---|---|---|---|---|
| **Starting material (mol%)** | **2A** | **2B** | **2C** | **2D** |
| Neopentylglycol | 34 | 32 | 33 | 26 |
| Propylene glycol | 9 | 12 | 7 | 11 |
| Dipropylene glycol | | | 4 | 3 |
| 2-Butyl-2-ethyl-1,3-propanediol | | 5 | 5 | |
| 2,2,4-Trimethyl-1, 2-pentanediof | 6 | | | 10 |
| Isophthalic acid | 12 | 11 | 13 | 14 |
| Adipic acid | 5 | 3 | | |
| Maleic anhydride | 29 | 31 | 32 | 31 |
| Benzyl alcohol | 5 | 6 | 6 | 5 |

| **Property of linear polyester:** | | | | |
|---|---|---|---|---|
| Cook end points: I.C.I./125 °C (Pas) | 4.3 | 2.8 | 3.4 | 4 |
| Acid number | 18 | 9 | 10 | 16 |

| **Property of linear polyester in styrene:** | | | | |
|---|---|---|---|---|
| I.C.I./25 °C (Pas) 35 % styrene | 2.6 | 2.4 | 2.7 | 3 |
| Mw | 2800 | 2600 | 2840 | 2500 |
| Mn | 1300 | 1200 | 1500 | 1400 |

| **Mechanical properties of cured resin in 40 % styrene** | | | | |
|---|---|---|---|---|
| Tensile strength (MPa) | 60 | 57 | 48 | 60 |
| Tensile elong (%) | 5 | 5 | 4 | 5 |
| Tensile modulus (MPa) | 2600 | 2500 | 2500 | 3000 |
| HDT (°C) | 71 | 70 | 56 | 71 |
| Barcol | 34 | 33 | 36 | 36 |

### EXAMPLE 3 Gelcoats 3A, 3B, 3C and 3D made from resins 2A, 2B, 2C and 2D for general purpose applications

| **Gelcoat** | | | | |
|---|---|---|---|---|
| **Constituent (wt%)** | **3A** | **3B** | **3C** | **3D** |
| **Resin (30 % styrene)** | **2A 64** | **2B 64** | **2C 64** | **2D 64** |
| Air release agent | 0.2 | 0.2 | 0.2 | 0.2 |
| Talc | 7 | 7 | 7 | 7 |
| Titanium dioxide | 17 | 17 | 17 | 17 |
| Thixotropic agent | 1.3 | 1.3 | 1.3 | 1.3 |
| Styrene | 7.5 | 7.5 | 9.5 | 11 |
| Cobalt (10 %) | 0.12 | 0.12 | 0.12 | 0.12 |
| Inhibitor | 0.13 | 0.13 | 0.13 | 0.13 |

| **Property:** | | | | |
|---|---|---|---|---|
| Styrene % | 28 | 28 | 29 | 30 |
| Styrene emission ** (ppm) | 145 | 150 | 185 | 145 |
| Brookfield viscosity/10 RPM | 11940 | 11400 | 7420 | 8920 |
| Thixotropic index 5/50 RPM | 5.1 | 5.2 | 4.4 | 4.68 |
| Accelerated weathering test: | | | | |
| Gloss 60° | 90 | 89 | 91 | 92 |
| QUV-A 250 h CIE L*a*b* (Db*) | 1.1 | 1 | 1.2 | 1.3 |
| Gloss 60° | 83 | 84 | 85 | 85 |
| QITV-A 500 b CIE L*a*b* (Db*) | 1.4 | 1.3 | 1.7 | 2 |
| Gloss 60° | 81 | 81 | 84 | 83 |

| | | | | |
|---|---|---|---|---|
| ** maximum styrene concentration in exhaust air during spraying | | | | |

### EXAMPLE 4 Resins 4A, 4B, 4C, 4D and 4E for marine applications

| **Resin** | | | | |
|---|---|---|---|---|
| **Starting material (mol%)** | **4A** | **4B** | **4C** | **4E** |
| Neopentyl glycol | 23 | 30 | 30 | 30 |
| Propylene glycol | 11 | 10 | 11 | 12 |
| 2-Buryl-2-ethyl-1,3- | 6 | 3 | 3 | 3 |
| propanediol | | | | |
| Hydroxypivalyl | 9 | 5 | 5 | 5 |
| hydroxypivalate | | | | |
| Isophthalic acid | 16 | 14 | 14 | 13 |
| Adipic acid | | 2 | 2 | 2 |
| Maleic anhydride | 29 | 30 | 29 | 29 |
| 2-Phenyl ethyl alcohol | | 3 | 3 | 3 |
| Benzoic acid | 6 | 3 | 3 | 3 |

| **Property of linear polyester:** | | | | |
|---|---|---|---|---|
| Cook end points: | 3.2 | 2.5 | 2.5 | 1.5 |
| I.C.I./150 °C)Pas) | | | | |
| Acid number | 42 | 21 | 18 | 17 |

| **Property of linear polyester in styrene:** | | | | |
|---|---|---|---|---|
| I.C.I./25 °C (Pas) 35 % styrene | 7 | 4.7 | 4.6 | 3.3 |
| Mw | 3100 | 3600 | 3500 | 3000 |
| Mn | 1700 | 1900 | 1400 | 1500 |

| **Mechanical properties of cured resin in 40 % styrene** | | | | |
|---|---|---|---|---|
| Tensile strength (MPa) | 67 | 87 | 73 | 65 |
| Tensile elongation (%) | 3 | 5 | 3 | 4 |
| Tensile modulus (MPa) | 3500 | 4300 | 3800 | 3400 |
| HDT(°C) | 73 | 75 | 73 | 64 |
| Barcol | 39 | 38 | 37 | 38 |
| Water abs (28d)/(mg) / piece | 78 | 73 | 73 | 73 |

### EXAMPLE 5 . Gelcoats 5A, 5b, 5C, 5D and 5E made from resin 4A, 4B, 4C, 4D and 4E for marine applications and commercial isophthalic based marine gekoat GN 10000S (Neste Oy) for reference purposes

| **Gelcoats** | | | | | **Reference gelcoat** |
|---|---|---|---|---|---|
| **Constituent (w%)** | **5A** | **5B** | **5C** | **5D** | **GN 10000S** |
| **Resin (styrene 30 %)** | **4A 63** | **4B 63** | **4C 67** | **4D 64** | |
| Air release agent | 0.2 | 0.2 | 0.2 | 0.2 | |
| Talc | 7 | 7 | 7 | 7 | |
| Titanium dioxide | 15 | 15 | 15 | 15 | |
| Thixotropic agent | 1.3 | 1.3 | 1.3 | 1.3 | |
| Styrene | 13.5 | 14 | 9 | 12 | |
| Cobalt (10 %) | 0.12 | 0.12 | 0.12 | 0.12 | |
| Inhibitor | 0.13 | 0.13 | 0.13 | 0.13 | |

| **Property:** | | | | | |
|---|---|---|---|---|---|
| Styrene % | 33 | 33 | 30 | 28 | 36 |
| Styrene | 175 | 210 | 200 | 190 | 260 |
| emission** (ppm) | | | | | |
| Brookfield viscosity/ 10 RPM | 8500 | 4160 | 10560 | 6680 | 7500 |
| Thixotropic index 5/50 RPM | 4.5 | 4.3 | 4.8 | 4.2 | 4.8 |
| Acceterated weathering test: | | | | | |
| Gloss 60° | 95 | 88 | 90 | 87 | 84 |
| QUV-A 250 h CIE L*a*b* (Db*) | 2 | 1.8 | 0.9 | 1.3 | 1.9 |
| Gloss 60° | 85 | 84 | 84 | 84 | 81 |
| QIJV-A 500 h CIE L*a*b* (Db*) | 1.7 | 1.2 | 1.9 | 2.4 | 2.9 |
| Gloss 60° | 84 | 86 | 83 | 85 | 81 |

| | | | | | |
|---|---|---|---|---|---|
| ** maximum styrene concentration in exhaust air during spraying | | | | | |

## Claims

1. Unsaturated polyester resin, **characterized in that** the resin comprises 20-85 wt% of at least one unsaturated polyester having a weight average molecular weight Mw of 2000-6000, prepared from
1) 30-70 mol% of at least two unsaturated carboxylic acids or derivatives thereof and at least one of them is an unsaturated carboxylic acid or a derivative thereof selected from maleic acid, maleic anhydride and fumaric acid, and at least one of them is an unsaturated aromatic carboxylic acid or a derivative thereof selected from phthalic acid, phtalic anhydride, teraphtalic acid, isophtalic acid, tetrahydrophtalic anhydride, hexahydrophtalic acid and hexahydrophtalic anhydride and optionally of one or more other carboxylic acids or derivatives thereof selected from adipic acid, trimellitic acid, trimellitic anhydride, dimethylmalonic acid, hydroxypivalic acid and 1,4-cyclohexanedicarboxylic acid;
2) 30-70 mol% of at least two diols and at least one of them is selected from 2,2,4-trimethyl-1,3-pentanediol and 2-butyl-2-ethyl-1,3-propanediol and the amount of 2,2,4-trimethyl-1.3-pentanediol and/or 2-butyl-2-ethyl-1,3-pmpanediol is 0.5-8 mol%;
3) 0.5-10 mol% of at least one monoalcohol;
4) optionally a modifying chemical/chemicals selected from benzoic acid, lauric acid, 2-ethylbutyric acid,2-ethyl hexanoic acid, phenylacetic acid, glycidyl ester of neodecanoic acid and epoxystyrene, and the total amount of monoalcohols and modifying chemicals is 0.5-20 mol%;
and 15-50 wt% of at least one reactive diluent.

2. Unsaturated polyester resin according to claim 1, **characterized in that** the resin comprises 30-80 wt% of at least one unsaturated polyester having a weight average molecular weight of 2600-6000, prepared from
1) 40-60 mol% of at least two carboxylic acids or derivatives thereof;
2) 40-60 mol% of at least two diols and the amount of 2,2,4-trimethyl-1,3-pentanediol and/or 2-butyl-2-ethyl-1,3-propanediol is 2-6 mol%;
3) 2-6 mol% of at least one monoalcohol;
4) optionally a modifying chemical/chemicals and the total amount of monoalcohols and modifying chemicals is 1-15 mol%;
and 20-35 wt% of at least one reactive diluent.

3. Unsaturated polyester resin according to any one of claims 1 or 2, **characterized in that** the other diols are selected from ethylene glycol, propylene glycol, diethylene glycol, dipropylene glycol, neopentyl glycol, triethylene glycol, tripropylene glycol, cyclohexane dimethanol, hexane diol, butylene glycol, hydroxypivalyl hydroxy pivalate, 2-ethyl-1,3-hexanediol, 1,3-propanediol, 1,5-pentanediol, 2,2-diethyl-1,3-propanediol, polypropylene glycol, 1,2,3-propanetriol polymer with methyl oxirane, trimethylolropane polymer with methyl oxirane, 2-methyl-1,3-propanediol and 2-methyl-2,4-pentanediol.

4. Unsaturated polyester resin according to any one of claims 1-3, **characterized in that** the monoalcohols are selected from benzyl alcohol, phenylethanol, cyclohexanol, 2-ethylhexanol, 2-cyclohexyl ethanol, 2,2-dimethyl 1-propanol and lauryl alcohol.

5. Unsaturated polyster resin according to any one of claims 1-4, **characterized in that** the acid number is 1-50 and Mn is 700-2500.

6. Unsaturated polyester resin according to any one of claims 1-5, **characterized in that** the acid number is 3-20 and Mn is 1000-2200.

7. A process for the manufacture of an unsaturated polyester resin, **characterized in that** 30―70 mol% of at least two unsaturated carboxylic acids or derivatives thereof and at least one of them is an unsaturated carboxylic acid or a derivative thereof selected from maleic acid, maleic anhydride and fumaric acid, and at least one of them is an unsaturated aromatic carboxylic acid or a derivative thereof selected from phthalic acid, phtalic anhydride, terepbalic acid, isophtalic acid, tetrahydrophtalic anhydride, hexahydrophtalic acid or hexahydrophtalic anhydride, and optionally of one or more other carboxylic acids or derivatives thereof selected from adipic acid, trimellitic acid, trimellitic anhydride, dimethybnalonic acid, hydroxypivalic acid and 1,4-cyclohexanedicarboxylic acid, and 30-70 mol% of at least two diols and at least one of them is selected from 2,2,4-trimethyl-1,3-pentanediol and 2-butyl-2-ethyl-1,3-propanediol and the amount of 2,2,4-trimethyl-1,3-pentanediol and/or 2-butyl-2-ethyl-1,3 is 0.5-8 mol%, and 0.5-10 mol% of at least one monoalcohol, and optionally a modifying chemical/chemicals selected from benzoic acid, lauric acid, 2-ethylbutyric acid,2-ethyl hexanoic acid, phenylacetic acid, glycidyl ester of neodecanoic acid and epoxystyrene, and the total amount of monoalcohol/alcohols and modifying chemical/chemicals is 0.5-20 mol%, are charged to a suitable reaction vessel and the reaction is carried out at a tenaperature of 180-240 °C and it is continued until the acid number of 1-50 is reached, if maleic anhyride is used with isophthalic or terephthalic arid, the reaction is allowed to proceed without maleic anhydride until the reaction mixture is clear and until acid number below 70 is reached, then, after cooling of the reaction mixture, maleic anhydride is added, and finally the linear unsaturated polyester or mixtures thereof are dissolved in an amount of 15-50 wt% of at least one reactive diluent.

8. A process for the manufacture of an unsaturated polyester resin according to claim 7, **characterized in that** 40-60 mol% of at least two carboxylic acids or derivatives thereof, and 40-60 mol% of at least two diols and the amount of 2,2,4-trimethyl-1,3-pentanediol and/or 2-butyl-2-ethyl-1,3-propanediol is 2-6 mol%, and 2-6 mol% of at least one monoalcohol, and the total amount of monoalcohol/alcohols and modifying chemical/chemicals is 1-15 mol%, are charged to a suitable reaction vessel and the reaction is carried out at a temperature of 190-230 °C and it is continued until the acid number of 3-40 is reached, if maleic anhyride is used with isophthalic or terephthalic acid the reaction is allowed to proceed without maleic anhydride until the reaction mixture is clear and until acid number below 30 is reached, then after cooling of the reaction mixture maleic anhydride is added, and finally the linear polyester or mixtures thereof are dissolved in an amount of 20-35 wt% of at least one reactive diluent.

9. A process for the manufacture of an unsaturated polyester resin according to claim 7 or 8, **characterized in that** the other diols are selected from ethylene glycol, propylene glycol, diethylene glycol, dipropylene glycol, neopentyl glycol, triethylene glycol, tripropylene glycol, cyclohexane dimethaaol, hexane diol, butylene glycol, hydroxypivalyl hydmxy pivalate, 2-ethyl-1,3-hexanediol, 1,3-propanediol, 1,5-pentanediol, 2,2-diethyl-1,3-piopanediol, polypropylene glycol, 1,2,3-propaneiriol polymer with methyl oxirane, trimethylolropane polymer with methyl oxirene, 2-methyl-1,3-propanediol and 2-methyl-2,4-pentanediol.

10. A process for the manufacture of an unsaturated polyester resin according to any one of claims 7 - 9, **characterized in that** the monoalcohols are selected from benzyl alcohol, phenylethanol, cyclohexanol, 2-ethylhexanol, 2-cyclohexyl ethanot, 2,2-dimethyl-1-propanol and layryl alcohoL

11. A product obtained by the process according to claims 7-10, **characterized in that** the weight average molecular weight Mw of the product is 2000-6000, preferably 2600-6000 and number average molecular weight Mn of the product is 700-2500, preferably 1000-2200.

12. Use of the unsaturated polyester resin according to claims 1-6 or 11, **characterized in that** it is used as a resin for general purpose resins, for marine applications, for fiber glass reinforced products, artificial marble, artificial onyx, sheet moulding compounds, resin transfer moulding applications, hand and spray lamination applications, sanitary applications, pigmented and clear gelcoats and topcoats/enamels.

13. Gelcoat, **characterized in that** it comprises 20-85 wt%, preferably 30-80 wt% of at least one unsaturated polyester with a weight average molecular weight Mw of 2000-6000, preferably 2600-6000 and 15-50 wt%, preferably 20-35 wt% of at least one reactive diluent, and additives selected from the group consisting of catalysts, inhibitors, thixotropic agents, thixotropy enhancers, promoters, co-promoters, fillets, pigments, air release agents, wetting agents, lewelling agents, surfactants and suppressants, and that the unsaturated polyester is prepared from
1) 30-70 mol%, preferably 40-60 mol% of at least two unsaturated carboxylic acids or derivatives thereof and at least one of them is an unsaturated carboxylic acid or a derivative thereof selected from maleic acid, maleic anhydride and fumaric acid and at least one of them is an unsaturated aromatic carboxylic acid or a derivative thereof selected from phthalic acid, phthalic anhydride, terephthalic acid, isophthalic acid, terahydrophthalic anhydride, hexahydrophthalic acid and hexahydrophthalic anhydride and optionally of one or more other carboxylic acids or derivatives thereof thereof selected from adipic acid, trimellitic acid, trimellitic anhydride, dimethylmalonic acid, hydroxypivalic acid and 1,4-cyclohexanedicarboxylic acid;
2) 30-70 mol%, preferably 40-60 mol% of at least two diols and at least one of them is selected from 2,2,4-trimethyl-1,3-pentanediol and 2-butyl-2-ethyl-1,3-propanediol and the amount of 2,2,4-trimethyl-1,3-pentanediol and/or 2-butyl-2-ethyl-1,3-gropandiol is 0.5-8 mol%, preferably 2-6 mol%;
3) 0.5-10 mol%, preferably 2-6 mol% of at least one monoalcohol;
4) optionally a modifying chemical/chemicals selected from benzoic acid, lauric acid, 2-ethylbutyric acid,2-ethyl hexanoic acid, phenylacetic acid, glycidyl ester of neodecanoic acid and epoxystyrene and the total amount of monoalcohols and modifying chemicals is 0.5-20 mol%, preferably 1-15 mol%..

14. Gelcoat according to claim 13 for marine applications, **characterized in that** the unsaturated polyester is prepared from
1) unsaturated and other carboxylic acids or derivatives thereof, selected from the group consisting of phthalic anhydride, isophthalic acid, tetrahydrophthalic anhydride, hexahydrophthalic anhydride, adipic acid, maleic anhydride and 1,4-cyclohexanedicarboxylic acid;
2) other diol/diols selected from the group consisting of propylene glycol, dipropylene glycol, diethylene glycol, neopentyl glycol, cyclohexane dimethanol, hexanediol, hydroxyvinyl hybroxypivalate, 1,5-pentanediol, 1,3-propanediol, 2-ethyl-1,3-hexanediol, 2,2-diethyl-1,3-propanediol, 2-methyl-1,3-propanediol, 2-methyl-2,4-pentanediol, polypropylene glycol, 1,2,3-propanetriol polymer with methyl oxirane and trimetbyloipropane polymer with methyl oxirane;
3) a monoalcohol/monoalcohols selected from the group consisting of benzyl alcohol, phenyl ethanol, cyclohexanol, 2-ethyl hexanol and optionally a modifying chemical/chemicals selected from the group consisting of benzoic acid, glycidyl ester of neodecanoic acid, 2-cyclohexylethanol, 2,2-dimethyl-1-propanol, epoxystyrene and phenylacetic acid.

15. Gelcoat according to claim 13 or 14, **characterized in that** the mechanical properties of the cured unsaturated polyester resin are:
Tensile strength ≥ 50 MPa.
Tensile modulus ≥ 3000 MPa.
Bending temperature (HDT) ≥ 70°C.
Water absorption ≤ 80 mg/piece/28 d.
Barcol hardness ≥ 35.

16. Gelcoat according to claim 13 for general purposes, **characterized in that** the polyester is prepared from:
1) unsaturated and other carboxylic acids or derivatives thereof selected from the group consisting of phthalic anhydride, isophthalic acid, tetrahydrophthalic anhydride, terephtalic acid, adipic acid, maleic anhydride, trimellitic acid, dimethylmalonic acid and hydroxypivalic acid;
2) other diol/diols selected from the group consisting of propylene glycol, dipropylene glycol, ethylene glycol, diethylene glycol, triethylene glycol, tripropyleneglycol, neopentyl glycol, butylene glycol, hydroxypivalyl hydroxypivalate, 1,5-pentanediol, hexanediol, 1,3-propanediol, 2-methyl-1,3-propanediol, 2-methyl-2,4-pentanediol, polypropylene glycol, 1,2,3-propanetriol polymer with methyloxirane and trimethylolpropane polymer with methyl oxirane;
3) a monoalcohol/monoalcohols selected from the group consisting of benzyl alcohol, 2-ethylhexanol, 2,2-dimethyl-1-propanol, layryl alcohol, and optionally a modifying chemical/chemicals selected from the group consisting of benzoic acid phenyl acetic acid, 2-ethylhexanoic acid and lauric acid.

## Patentansprüche

1. Ungesättigtes Polyesterharz, **dadurch kennzeichnet, dass** das Harz 20 bis 85 Gewichtsprozent zumindest eines ungesättigten Polyesters mit einem gewichtsbezogenen durchschnittlichen Molekulargewicht Mw von 2000 bis 6000 umfasst, hergestellt aus
1) 30 bis 70 mol % zumindest zweier ungesättigter Carbonsäuren oder von Derivaten derselben, wobei zumindest eine von ihnen eine ungesättigte Carbonsäure oder ein Derivat derselben ist, ausgewählt aus Maleinsäure, Maleinanhydrid und Fumarsäure, und zumindest eine von ihnen eine ungesättigte aromatische Carbonsäure oder ein Derivat derselben ist, ausgewählt aus Phthalsäure, Phthalsäureanhydrid, Terephtalsäure, Isophthalsäure, Tetrahydrophtalsäureanhydrid, Hexahydrophtalsäure und Hexahydrophtalsäureanhydrid und optional einer oder mehrerer anderer Carbonsäure oder Derivaten derselben, ausgewählt aus Adipinsäure, Trimellitinsäure, Trimellitinanhydrid, Dimethylmalonsäure, Hydroxypivalinsäure und 1,4-Cyclohexandicarboxylsäure;
2) 30 bis 70 mol-% zumindest zweier Diole, von denen zumindest eines ausgewählt ist aus 2,2,4 -Trimethyl-1,3 Pentandiol und 2-Butyl-2-Ethyl-1,3-Propandiol und die Menge an 2,2,4 -Trimethyl-1,3 Pentandiol und/oder 2-Butyl-2-Ethyl-1,3-Propandiol 0,5 bis 8 mol-% beträgt;
3) 0,5 bis 10 mol % zumindest eines Monoalkohols;
4) optional einer modifizierenden Chemikalie/Chemikalien ausgewählt aus Benzoesäure, Laurinsäure, 2-Ethylbutylsäure, 2 Ethylhexansäure, Phenylessigsäure, Glycidylester aus Neodekansäure und Epoxystyrol, wobei die Gesamtmenge an Monoalkoholen und modifizierenden Chemikalien 0,5 bis 20 mol % beträgt;
und 15 bis 50 Gew.-% zumindest eines reaktiven Verdünnungsmittels.

2. Ungesättigtes Polyesterharz gemäß Anspruch 1, **dadurch gekennzeichnet, dass** das Harz 30 bis 80 Gew.-% zumindest eines ungesättigten Polyesters mit einem gewichtsbezogenen durchschnittlichen Molekulargewicht von 2600 bis 6000 umfasst, hergestellt aus
1) 40 bis 60 mol % zumindest zweier Carbonsäuren oder Derivate derselben;
2) 40 bis 60 mol % zumindest zweier Diole, wobei die Menge an 2,2,4 - Trimethyl-1,3 Pentandiol und/oder 2-Butyl-2-Ethyl-1,3-Propandiol 2 bis 6 mol-% beträgt;
3) 2 bis 6 mol % zumindest eines Monoalkohols;
4) optional einer modifizierenden Chemikalie/Chemikalien, wobei die Gesamtmenge an Monoalkoholen und modifizierenden Chemikalien 1 bis 15 mol % beträgt;
und 20 bis 35 Gewichtsprozent zumindest eines reaktiven Verdünnungsmittels.

3. Ungesättigtes Polyesterharz gemäß einem der Ansprüche 1 oder 2, **dadurch gekennzeichnet, dass** die anderen Diole ausgewählt sind aus Ethylenglykol, Propylenglykol, Diethylenglykol, Dipropylenglykol, Neopentylglykol, Triethylenglykol, Tripropylenglykol, Cyclohexandimethanol, Hexandiol, Butylenglykol, Hydroxypivalylhydroxypivalat, 2-Ethyl-1,3-Hexandiol, 1-3-Propandiol, 1,5-Pentandioi, 2,2-Diethyl-1,3-Propandiol, Polypropylenglykol , 1,2,3-Propantriol-Polymer mit Methyloxiran, Trimethylolpropan-Polymer mit Methyloxiran, 2-Methyl-1,3-Propandiol und 2-Methyl-2,4-Pentandiol.

4. Ungesättigtes Polyesterharz gemäß einem der Ansprüche 1 bis 3, **dadurch gekennzeichnet, dass** die Monoalkohole ausgewählt sind aus Benzylalkohol, Phenylethanol, Cyclohexanol, 2-Ethylhexanol, 2-Cyclohexylethanol, 2,2 Dimethyl-1-Propanol und Laurylalkohol.

5. Ungesättigtes Polyesterharz gemäß einem der Ansprüche 1 bis 4, **dadurch gekennzeichnet, dass** die Säurezahl 1 bis 50 beträgt und Mn 700 bis 2500 beträgt.

6. Ungesättigtes Polyesterharz gemäß einem der Ansprüche 1 bis 5, **dadurch gekennzeichnet, dass** die Säurezahl 3 bis 20 beträgt und Mn 1000 bis 2200 beträgt.

7. Verfahren zur Herstellung eines ungesättigten Polyesterharzes, **dadurch gekennzeichnet, dass** 30 bis 70 mol % zumindest zweier ungesättigter Carbonsäuren oder von Derivaten derselben, wobei zumindest eine von ihnen eine ungesättigte Carbonsäure oder ein Derivat derselben ist, ausgewählt aus Maleinsäure, Maleinanhydrid und Fumarsäure, und zumindest eine von ihnen eine ungesättigte aromatische Carbonsäure oder ein Derivat derselben ist, ausgewählt aus Phthalsäure, Phthalanhydrid, Terephtalsäure, Isophthalsäure, Tetrahydrophtalsäureanhydrid, Hexahydrophtalsäure oder Hexahydrophtalsäureanhydrid und optional eine oder mehrere anderer Carbonsäure oder Derivaten derselben, ausgewählt aus Adipinsäure, Trimellitinsäure, Trimellitinanhydrid, Dimethylmalonsäure, Hydroxypivalinsäure und 1,4-Cyclohexandicarboxylsäure; und 30 bis 70 mol-% zumindest zweier Diole, von denen zumindest eines ausgewählt ist aus 2,2,4 -Trimethyl-1,3 Pentandiol und 2-Butyl-2-Ethyl-1,3-Propandiol und die Menge an 2,2,4 -Trimethyl-1,3 Pentandiol und/oder 2-Butyl-2-Ethyl-1,3-Propandiol 0,5 bis 8 mol-% beträgt; und 0,5 bis 10 mol % zumindest eines Monoalkohols; und optional eine modifizierende Chemikalie/Chemikalien ausgewählt aus Benzoesäure, Laurinsäure, 2-Ethylbutylsäure, 2 Ethylhexansäure, Phenylessigsäure, Glycidylester aus Neodekansäure und Epoxystyrol, wobei die Gesamtmenge an Monoalkoholen und modifizierenden Chemikalien 0,5 bis 20 mol % beträgt; in ein geeignetes Reaktionsgefäß vorgelegt werden und die Reaktion bei einer Temperatur von 180 bis 240 °C durchgeführt wird und fortgesetzt ist, bis die Säurezahl von 1 bis 50 erreicht wird, falls Maleinanhydrid mit Isophthal- oder Therephtalsäure verwendet wird und der Reaktion gestattet wird, ohne Maleinanhydrid fortzuschreiten, bis die Reaktionsmischung klar ist und bis eine Säurezahl unter 70 erreicht wird, dann nach Abkühlen der Reaktionsmischung Maleinanhydrid zugesetzt wird und schließlich das lineare ungesättigte Polyester oder Mischungen desselben in einer Menge von 15 bis 50 Gew.-% zumindest eines reaktiven Verdünnungsmittels gelöst werden.

8. Verfahren zur Herstellung eines ungesättigten Polyesterharzes gemäß Anspruch 7, **dadurch gekennzeichnet, dass** 40 bis 60 mol % zumindest zweier Carbonsäuren oder Derivate derselben; und 40 bis 60 mol % zumindest zweier Diole, wobei die Menge an 2,2,4 -Trimethyl-1,3 Pentandiol und/oder 2-Butyl-2-Ethyl-1,3-Propandiol 2 bis 6 mol-% beträgt; und 2 bis 6 mol % zumindest eines Monoalkohols; wobei die Gesamtmenge an Monoalkoholen/Alkoholen und modifizierenden Chemikalien 1 bis 15 mol % beträgt; in ein geeignetes Reaktionsgefäß vorgelegt werden und die Reaktion bei einer Temperatur von 190 bis 230 °C durchgeführt wird und fortgesetzt wird, bis die Säurezahl von 3 bis 40 erreicht ist, falls Maleinanhydrid mit Isophthal- oder Therephtalsäure verwendet wird und der Reaktion gestattet wird, ohne Maleinanhydrid fortzuschreiten, bis die Reaktionsmischung klar ist und bis eine Säurezahl unter 30 erreicht ist, dann nach Abkühlen der Reaktionsmischung Maleinanhydrid zugegeben wird und schließlich das lineare Polyester oder Mischungen desselben in einer Menge von 20 bis 35 Gew.-% zumindest eines reaktiven Verdünnungsmittels gelöst werden.

9. Verfahren zur Herstellung eines ungesättigten Polyesterharzes gemäß Anspruch 7 oder 8, **dadurch gekennzeichnet, dass** die anderen Diole ausgewählt sind aus Ethylenglykol, Propylenglykol, Diethylenglykol, Dipropylenglykol, Neopentylglykol, Triethylenglykol, Tripropylenglykol, Cyclohexandimethanol, Hexandiol, Butylenglykol, Hydroxypivalylhydroxypivaiat, 2-Ethyl-1,3-Hexandiol, 1-3-Propandiol, 1,5-Pentandiol, 2,2-Diethyl-1,3-Propandiol, Polypropylenglykol 1,2,3-Propantriol-Polymer mit Methyloxiran, Trimethylolpropan-Polymer mit Methyloxiran, 2-Methyl-1,3-Propandiol und 2-Methyl-2,4-Pentandiol.

10. Verfahren zur Herstellung eines ungesättigten Polyesterharzes gemäß einem der Ansprüche 7 bis 9, **dadurch gekennzeichnet, dass** die Monoalkohole ausgewählt sind aus Benzylalkohol, Phenylethanol, Cyclohexanol, 2-Ethylhexanol, 2-Cyclohexylethanol, 2,2 Dimethyl-1-Propanol und Laurylalkohol.

11. Produkt, erhalten durch das Verfahren gemäß den Ansprüchen 7 bis 10, **dadurch gekennzeichnet, dass** das gewichtsbezogene durchschnittliche Molekulargewicht Mw des Produktes 2000 bis 6000, vorzugsweise 2600 bis 6000 beträgt und das anzahlbezogene durchschnittliche Molekulargewicht Mn des Produktes 700 bis 2500, vorzugsweise 1000 bis 2200 beträgt.

12. Verwendung eines ungesättigten Polyesterharzes gemäß den Ansprüchen 1 bis 6 oder 11, **dadurch gekennzeichnet, dass** es als Harz für Universalharze, für nautische Anwendungen, für Fiberglas-verstärkte Produkte, künstlichen Marmor, künstlichen Onyx, Blattformverbindungen, Harzübertragungsformanwendungen, Hand- und Sprühlaminierungsanwendungen, sanitäre Anwendungen, pigmentierte und klare Gelschichten und Beschichtungen/Emaile verwendet wird.

13. Gelschicht, **dadurch gekennzeichnet, dass** sie 20 bis 85 Gew.-%, vorzugsweise 30 bis 80 Gew.-% zumindest eines ungesättigten Polyesters mit einem gewichtsbezogenen durchschnittlichen Molekulargewicht Mw von 2000 bis 6000, vorzugsweise 2600 bis 6000 und 15 bis 50 Gew.-%, vorzugsweise 20 bis 35 Gew.-% zumindest eines reaktiven Verdünnungsmittels und Additive enthält, die ausgewählt sind aus der Gruppe, die aus Katalysatoren, Inhibitoren, Fließmitteln, Verdickungsmitteln, Promotoren, Copromotoren, Füllern, Pigmenten, Entlüftungsmitteln, Netzmitteln, Ausgleichsmitteln, Tensiden und Unterdrückern besteht, und dass das ungesättigte Polyester hergestellt wird aus
1) 30 bis 70 mol %, vorzugsweise 40 bis 60 mol %, zumindest zweier ungesättigter Carbonsäuren oder von Derivaten derselben, wobei zumindest eine von ihnen eine ungesättigte Carbonsäure oder ein Derivat derselben ist, ausgewählt aus Maleinsäure, Maleinanhydrid und Fumarsäure, und zumindest eine von ihnen eine ungesättigte aromatische Carbonsäure oder ein Derivat derselben ist, ausgewählt aus Phthalsäure, Phthalanhydrid, Terephtalsäure, Isophthalsäure, Tetrahydrophtalsäureanhydrid, Hexahydrophtalsäure und Hexahydrophtalsäureanhydrid und optional einer oder mehrerer underer Carbonsäure oder Derivaten derselben, ausgewählt aus Adipinsäure, Trimellitinsäure, Trimelthitinanhydrid, Dimethylmalonsäure, Hydroxypivalinsäure und 1,4-Cyclohexandicarboxylsäure;
2) 30 bis 70 mol-%, vorzugsweise 40 bis 60 mol %, zumindest zweier Diole, von denen zumindest eines ausgewählt ist aus 2,2,4 - Trimethyl-1,3 Pentandiol und 2-Butyl-2-Ethyl-1,3-Propandiol und die Menge an 2,2,4 -Trimethyl-1,3 Pentandiol und/oder 2-Butyl-2-Ethyl-1,3-Propandioi 0,5 bis 8 mol-%, vorzugsweise 2 bis 6 mol % beträgt;
3) 0,5 bis 10 mol %, vorzugsweise 2 bis 6 mol % zumindest eines Monoalkohols;
4) optional einer modifizierenden Chemikalie/Chemikalien ausgewählt aus Benzoesäure, Laurinsäure, 2-Ethylbutylsäure, 2 Ethylhexansäure, Phenylessigsäure, Glycidylester aus Neodekansäure und Epoxystyrol, wobei die Gesamtmenge an Monoalkoholen und modifizierenden Chemikalien 0,5 bis 20 mol %, vorzugsweise 1 bis 15 mol %, beträgt.

14. Gelschicht gemäß Anspruch 13 für nautische Anwendungen, **dadurch gekennzeichnet, dass** das ungesättigte Polyester hergestellt wird aus
1) ungesättigten oder andern Karbonsäuren oder Derivaten derselben, ausgewählt aus der Gruppe, die aus Phtalsäureanhydrid, Isophthalsäure, Tetrahydrophtalsäureanhydrid, Hexahydrophtalsäureanhydrid, Adipinsäure, Maleinanhydrid und 1,4-Cyclohexandicarbonsäure besteht;
2) anderem/n Diol(en), ausgewählt aus der Gruppe, die besteht aus Propylenglykol, Dipropylenglykol, Diethylenglykol, Neopentylglykol, Cyclohexandimethanol, Hexandiol, Hydroxypivalylhydroxypivalat, 1,5-Pentandiol, 1,3-Propandiol, 2-Ethyl-1,3-Hexandiol, 2,2-Diethyl-1,3-Propandiol, 2-Methyl-1,3-Propandiol, 2-Methyl-2,4-Pentandiol, Polypropylenglykol, 1,2,3-Propantriol-Polymer mit Methyloxiran, und Trimethylolpropan-Polymer mit Methyloxiran,
3) einem Monoalkohol/Monoalkoholen ausgewählt aus der Gruppe, die aus Benzylalkohol, Phenylethanol, Cyklohexanol, 2- Ethylhexanal besteht, und optional einer modifizierenden Chemikalie/Chemikalien ausgewählt aus der Gruppe, die aus Benzoesäure Glycidylester von Neodekansäure, 2-Cyclohexylethanol, 2,2-Dimethyl-1-Propanol, Epoxysterol und Phenylessigsäure besteht.

15. Gelschicht gemäß Anspruch 13 oder 14, **dadurch gekennzeichnet, dass** die mechanischen Eigenschaften des ausgehärteten ungesättigten Polyesterharzes sind:
| | |
|---|---|
| Zugfestigkeit ≥ | 50 MPa |
| Zugmodul ≥ | 3000 MPa |
| Biegetemperatur (HOT) ≥ | 70°C |
| Wasseradsorption ≤ | 80 mg/Stück/ 28d |
| Barcofhärte ≥ | 35 |

16. Gelschicht gemäß Anspruch 13 für allgemeine Zwecke, **dadurch gekennzeichnet, dass** das das Polyester hergestellt wird aus
1) ungesättigten oder anderen Carbonsäuren oder Derivaten derselben, ausgewählt aus der Gruppe, die besteht aus Phthalsäureanhydrid, Isophthalsäure, Tetrahydrophtalsäureanhydrid, Terephtalsäure, Adipinsäure, Maleinsäureanhydrid, Trimellitinsäure, Dimethylmalonsäure und Hydroxypivalinsäure;
2) anderem/n Diol(en), ausgewählt aus der Gruppe, die besteht aus Propylenglykol, Dipropylenglykol, Ethylenglykol, Diethylenglykol, Triethylenglykol, Tripropylenglykol, Neopentylglycol, Hexandiol, Butylenglykol, Hydroxypivalylhydroxypivalat, 1,5-Pentandiol, Hexandiol, 1,3-Propandiol, 2-Methyl-1,3-Propandiol, 2-Methyl-2,4-Pentandiol, Polypropylenglykol, 1,2,3-Propantriol-Polymer mit Methyloxiran, und Trimethylolpropan-Polymer mit Methyloxiran,
3) einem Monoalkohol/ Monoalkoholen, ausgewählt aus der Gruppe, die besteht aus Benzylalkohol, 2-Ethylhexanol, 2,2 Dimethyl-1-Propanol Laurylalkohol, und optional einer modifizierenden Chemikalie/Chemikalien, ausgewählt aus der Gruppe, die besteht aus Phenylessigsäure Benzoesäure, 2 Ethylhexansäure und Laurinsäure.

## Revendications

1. Résine de polyester insaturé, **caractérisée en ce que** la résine comprend de 20 à 85 % en poids d'un moins un polyester insaturé ayant une masse moléculaire moyenne en poids Mw de 2000 à 6000, préparée à partir de
1) 30 à 70 % en mole d'au moins deux acides carboxyliques insaturés ou dérivés de ceux-ci et au moins l'un d'entre eux est un acide carboxylique insaturé ou un dérivé de celui-ci choisi entre un acide maléique, un anhydride maléique et un acide fumarique, et au moins l'un d'entre eux est un acide carboxylique aromatique insaturé ou un dérivé de celui-ci choisi entre un acide phtalique, un anhydride phtalique, un acide téréphtalique, un acide isophtalique, un anhydride tétrahydrophtalique, un acide héxahydrophtalique et un anhydride héxahydrophtalique et facultativement un ou plusieurs autres acides carboxyliques ou dérivés de ceux-ci choisis entre un acide adipique, un acide trimellitique, un anhydride trimellitique, un acide diméthylmalonique, un acide hydroxypivalique et un acide 1,4-cyclohexanedicarboxylique ;
2) 30 à 70 % en mole d'au moins deux diols et au moins l'un d'entre eux est choisi parmi un 2,2,4-triméthyl-1,3-pentanediol et un 2-butyl-2-éthyl-1,3-propanediol et la quantité de 2,2,4-triméthyl-1,3-pentanediol et / ou de 2-butyl-2-éthyl-1,3-propanediol est de 0,5 à 8 % en mole ;
3) 0,5 à 10 % en mole d'au moins un monoalcool ;
4) facultativement un / des produit(s) chimique(s) modificateur(s) choisi(s) entre un acide benzoïque, un acide laurique, un acide 2-éthhylbutyrique, un acide 2-éthylhéxanoïque, un acide phénylacétique, un ester glycidyle d'acide néodécanoïque et un époxystyrène, et la quantité totale des monoalcools et des produits chimiques modificateurs est de 0,5 à 20 % en mole ;
et de 15 à 50 % en poids d'au moins un diluant réactif.

2. Résine de polyester insaturé selon la revendication 1, **caractérisée en ce que** la résine comprend de 30 à 80 % en poids d'au moins un polyester insaturé ayant une masse moléculaire moyenne en poids de 2600 à 6000, préparé à partir de
1) 40 à 60 % en mole d'au moins deux acides carboxyliques ou de dérivés de ceux-ci ;
2) 40 à 60 % en mole d'au moins deux diols et la quantité de 2,2,4-triméthyl-1,3-pentanediol et / ou de 2-butyl-2-éthyl-1,3-propanedioi est de 2 à 6 % en mole ;
3) 2 à 6 % en mole d'au moins un monoalcool ;
4) facultativement un/des produit(s) chimique(s) modificateur(s) et la quantité totale de monoalcools et de produits chimiques modificateurs est de 1 à 15% en mole ;
et de 20 à 35 % en poids d'au moins un diluant réactif.

3. Résine de polyester insaturé selon l'une quelconque des revendications 1 ou 2, **caractérisée en ce que** les autres diols sont choisis entre un éthylène glycol, un propylène glycol, un diéthylène glycol, un dipropylène glycol, un néopentyle glycol, un triéthylène glycol, un tripropylène glycol, un diméthanol de cyclohexane; un hexanediol, un butylène glycol, un hydroxypivalate hydroxypivalyle, un 2-éthyl-1,3-hexanediol, un 1,3-propanediol, un 1,5-pentanediol, un 2,2-diéthyl-1,3-propanediol, un polypropylene glycol, un polymère de 1,2,3-propanetriol avec un méthyloxirane, un polymère de triméthylolropane avec un méthyloxirane, un 2-méthyl-1,3-propanediol et un 2-méthyl-2,4-pentanediol.

4. Résine de polyester insaturé selon l'une quelconque des revendications 1 à 3, **caractérisée en ce que** les monoalcools sont choisis entre un alcool benzylique, un phényléthanol, un cyclohexanol, un 2-éthylhexanol, un 2-cyclohexyl éthanol, un 2,2-diméthyl-1-propanol et un alcool laurique.

5. Résine de polyester insaturé selon l'une quelconque des revendications 1 à 4, **caractérisée en ce que** l'indice d'acidité est de 1 à 50 et la masse moléculaire moyenne en nombre Mn est de 700 à 2500.

6. Résine de polyester insaturé selon l'une quelconque des revendications 1 à 5, **caractérisée en ce que** l'indice d'acidité est de 3 à 20 et la masse moléculaire moyenne en nombre Mn est de 1000 à 2200.

7. Procédé de fabrication d'une résine de polyester insaturé, **caractérisé en ce que** 30 à 70 % mole d'au moins deux acides carboxyliques insaturés ou des dérivés de ceux-ci et au moins l'un d'entre eux est un acide carboxylique insaturé ou un dérivé de celui-ci choisi entre un acide maléique, un anhydride maléique et un acide fumarique, et au moins l'un d'entre eux est un acide carboxylique aromatique insaturé ou un dérivé de celui-ci choisi entre un acide phtalique, un anhydride phtalique, un acide téréphtalique, un acide isophtalique, un anhydride tétrahydrophtalique, un acide héxahydrophtalique ou un anhydride héxahydrophtalique et facultativement un ou plusieurs autres acides carboxyliques ou dérivés de ceux-ci choisi entre un acide adipique, un acide trimellitique, un anhydride trimellitique, un acide diméthylmalonique, un acide hydroxypivalique et un acide 1,4-cyclohexanedicarboxylique, et de 30 à 70 % en mole d'au moins deux diols et au moins l'un d'entre eux est choisi parmi un 2,2,4-triméthyl-1,3-pentanediol et un 2-butyl-2-éthyl-1,3-propanediol et la quantité de 2,2,4-triméthyl-1,3-pentanediol et / ou de 2-butyl-2-éthyl-1,3-propanediol est de 0,5 à 8 % en mole, et de 0,5 à 10 % en mole d'au moins un monoalcool, et facultativement un / des produit(s) chimique(s) modificateur(s) choisi(s) entre un acide benzoïque, un acide laurique, un acide 2-éthhylbutyrique, un acide 2-éthyl-héxanoïque, un acide phénylacétique, un ester glycidyle d'acide néodécanoïque et un époxystyrène, et la quantité totale des monoalcools / alcools et des produits chimiques modificateurs est de 0,5 à 20 % en mole, sont chargés dans un récipient à réaction adapté et la réaction est réalisée à une température de 180 à 240 °C et elle est continuée jusqu'à ce que l'indice d'acidité de 1 à 50 soit atteint, si l'anhydride maléique est utilisé avec l'acide isophtalique ou téréphtalique, la réaction peut continuer sans anhydride maléique jusqu'à ce que le mélange réactionnel soit incolore et jusqu'à ce qu'un indice d'acidité inférieur à 70 soit atteint, puis, après avoir refroidi le mélange réactionnel, l'anhydride maléique est ajouté et enfin le polyester insaturé linéaire ou des mélanges de celui-ci sont dissous dans une quantité de 15 à 50 % en poids d'au moins un diluant réactif.

8. Procédé de fabrication d'une résine de polyester insaturé selon la revendication 7, **caractérisé en ce que** 40 à 60 % en mole d'au moins deux acides carboxyliques ou de dérivés de ceux-ci, et 40 à 60 % en mole d'au moins deux diols et la quantité de 2,2,4-triméthyl-1,3-pentanediol et/ou de 2-butyl-2-éthyl-1,3-propanediol est de 2 à 6 % en mole, et 2 à 6 % en mole d'au moins un monoalcool et la quantité totale des monoalcools / alcools et du / des produit(s) chimique(s) modificateur(s) est de 1 à 15 % en mole, sont chargés dans un récipient à réaction adapté et la réaction est réalisée à une température de 190 à 230 °C et elle est continuée jusqu'à ce que l'indice d'acidité de 3 à 40 soit atteint, si l'anhydride maléique est utilisé avec l'acide isophtalique ou téréphtalique, la réaction peut continuer sans anhydride maléique jusqu'à ce que le mélange réactionnel soit incolore et jusqu'à ce qu'un indice d'acidité inférieur à 30 soit atteint, puis, après avoir refroidi le mélange réactionnel, l'anhydride maléique est ajouté et enfin le polyester insaturé linéaire ou des mélanges de celui-ci sont dissous dans une quantité de 20 à 35 % en poids d'au moins un diluant réactif.

9. Procédé de fabrication d'une résine de polyester insaturé selon la revendication 7 ou 8, **caractérisé en ce que** les autres diols sont choisis entre un éthylène glycol, un propylène glycol, un diéthylène glycol, un dipropylène glycol, un néopentyle glycol, un triéthylène glycol, un tripropylène glycol, un diméthanol de cyclohexane, un hexanediol, un butylène glycol, un hydroxypivalate hydroxypivalyle, un 2-éthyl-1,3-hexanediol, un 1,3-propanediol, un 1,5-pentanediol, un 2,2-diéthyl-1,3-propanediol, un polypropylène glycol, un polymère de 1,2,3-propanetriol avec un méthyloxirane, un polymère de triméthylolropane avec un méthyloxirane, un 2-méthyl-1,3-propanediol et un 2-méthyl-2,4-pentanediol.

10. Procédé de fabrication d'une résine de polyester insaturé selon l'une quelconque des revendications 7 à 9, **caractérisé en ce que** les monoalcools sont choisis entre un alcool benzylique, un phényléthanol, un cyclohexanol, un 2-éthylhexanol, un 2-cyclohexyl éthanol, un 2,2-diméthyl-1-propanol et un alcool laurique.

11. Produit obtenu par le procédé selon les revendications 7 à 10, **caractérisé en ce que** la masse moléculaire moyenne en poids Mw du produit est de 2000 à 6000, de préférence de 2600 à 6000, et la masse moléculaire moyenne en nombre Mn du produit est de 700 à 2500, de préférence de 1000 à 2200.

12. Utilisation d'une résine de polyester insaturé selon les revendications 1 à 6 ou 11 **caractérisée en ce qu'**elle est utilisée comme résine pour des résines à usage général, pour des applications marines, pour des produits en fibre de verre renforcé, pour du marbre artificiel, de l'onyx artificiel, des composés préimprégnés, des applications de résines de moulage par transfert, des applications de stratification à la main et par pulvérisation, des applications sanitaires, des enduits gélifiés pigmentés et incolores et des couches de finition / émaux.

13. Enduit gélifié **caractérisé en ce qu'**il comprend de 20 à 85 % en poids, de préférence de 30 à 80 % en poids d'au moins un polyester insaturé avec une masse moléculaire moyenne en poids Mw de 2000 à 6000, de préférence de 2600 à 6000 et de 15 à 50 % en poids, de préférence de 20 à 35 % en poids d'au moins un diluant réactif, et des additifs choisis dans le groupe comprenant des catalyseurs, des inhibiteurs, des agents thixotropes, des renforçateurs thixotropes, des accélérateurs, des co-accélérateurs, des charges, des pigments, des agents de purge d'air, des agents mouillants, des agents d'égalisation, des agents de surface et des suppresseurs, et **en ce que** le polyester insaturé est préparé à partir de
1) 30 à 70 % en mole, de préférence 40 à 60 % en mole d'au moins deux acides carboxyliques insaturés de dérivés de ceux-ci et au moins l'un d'entre eux est un acide carboxylique insaturé ou dérivé de celui-ci choisi entre un acide maléique, un anhydride maléique et un acide fumarique, et au moins l'un d'entre eux est un acide carboxylique aromatique insaturé ou un dérivé de celui-ci choisi entre un acide phtalique, un anhydride phtalique, un acide téréphtalique, un acide isophtalique, un anhydride tétrahydrophtalique, un acide héxahydrophtalique et un anhydride héxahydrophtalique et facultativement un ou plusieurs autres acides carboxyliques ou dérivés de ceux-ci choisi entre un acide adipique, un acide trimellitique, un anhydride trimellitique, un acide diméthylmalonique, un acide hydroxypivalique et un acide 1,4-cyclohexanedicarboxylique ;
2) 30 à 70 % en mole, de préférence 40 à 60 % en mole d'au moins deux diols et au moins l'un d'entre eux est choisi parmi un 2,2,4-triméthyl-1,3-pentanediol et un 2-butyl-2-éthyl-1,3-propanediol et la quantité de 2,2,4-triméthyl-1,3-pentanediol et/ou de 2-butyl-2-éthyl-1,3-propanediol est de 0,5 à 8 % en mole, de préférence de 2 à 6 % en mole ;
3) 0,5 à 10 % en mole, de préférence de 2 à 6 % en mole d'au moins un monoalcool ;
4) facultativement un / des produit(s) chimique(s) modificateur(s) choisi(s) entre un acide benzoïque, un acide laurique, un acide 2-éthylbutyrique, un acide 2-éthyl-héxanoïque, un acide phénylacétique, un ester glycidyle d'acide néodécanoïque et un époxystyrène, et la quantité totale des monoalcools et des produits chimiques modificateurs est de 0,5 à 20 % en mole, de préférence de 1 à 15 % en mole.

14. Enduit gélifié selon la revendication 13 pour des applications marines, **caractérisé en ce que** le polyester insaturé est préparé à partir
1) d'acides insaturés et d'autres acides carboxyliques ou de dérivés de ceux-ci choisis dans le groupe comprenant un anhydride phtalique, un acide isophtalique, un anhydride tétrahydrophtalique, un anhydride héxahydrophtalique, un acide adipique, un anhydride maléique et un acide 1,4-cyclohexanedicarboxylique ;
2) un autre diol / d'autres diols choisi(s) dans le groupe comprenant un propylène glycol, un dipropylène glycol, un diéthylène glycol, un néopentyle glycol un diméthanol de cyclohexane, un hexanediol, un hydroxypivalate hydroxypivalyle, un 1,5-pentanediol, un 1,3-propanediol, un 2-éthyl-1,3-hexanediol, un 2,2-diéthyl-1,3-propanediol, un 2-méthyl-1,3-propanediol, un 2-méthyl-2,4-pentanediol, un polypropylène glycol, un polymère de 1,2,3-propanetriol avec un métliyloxirane et un polymère de triméthylolropane avec un méthyloxirane.
3) d'un monoalcool / de monoalcools choisi(s) dans le groupe comprenant un alcool benzylique, un phényléthanol, un cyclohexanol, un 2- éthylhexanol, et facultativement un / des produit(s) chimique(s) modificateur(s) choisi(s) dans le groupe comprenant un ester glycidyle d'acide néodécanoïque, un acide benzoïque, 2-cyclohexyléthanol, un 2,2-diméthyl-1-propanol, un époxystyrène et un acide phénylacétique.

15. Enduit gélifié selon la revendication 13 ou 14, **caractérisé en ce que** les propriétés mécaniques de la résine de polyester insaturé cuite sont :
Résistance à la traction ≥ 50 MPa.
Module de traction ≥ 3000 MPa.
Température de pliage (HDT) ≥70 °C.
Absorption d'eau ≤ 80 mg / pièce / 28 d.
Dureté Barcol ≥ 35.

16. Enduit gélifié selon la revendication 13 à usage général, **caractérisé en ce que** le polyester est préparé à partir :
1) d'acides insaturés et d'autres acides carboxyliques ou de dérivés de ceux-ci choisis dans le groupe comprenant un anhydride phtalique, un acide isophtalique, un anhydride tétrahydrophtalique, un acide téréphtalique, un acide adipique, un anhydride maléique, un acide trimellitique, un acide diméthylmalonique et un acide hydroxypivalique ;
2) un autre diol / d'autres diols choisi(s) dans le groupe comprenant un propylène glycol, un dipropylène glycol, un éthylène glycol, un diéthylène glycol, un triéthylène glycol, un tripropylène glycol, un néopentyle glycol, un hexanediol, un butylène glycol, un hydroxypivalate hydroxypivalyle, un 1,5-pentanediol, un hexanediol, un 1,3-propanediol, un 2-méthyl-1,3-propanediol, un 2-méthyl-2,4-pentanediol, un polypropylène glycol, un polymère de 1,2,3-propanetriol avec un méthyloxirane et un polymère de triméthylolropane avec un méthyloxirane ;
3) d'un monoalcool / de monoalcools choisi(s) dans le groupe comprenant un alcool benzylique, un 2-éthylhexanol, un 2,2-diméthyl-1-propanol, un alcool laurique, et facultativement un / des produit(s) chimique(s) modificateur(s) choisi(s) dans le groupe comprenant un acidephénylacétiqueun acide benzoïque, un acide 2-éthylhexanoïque et un acide laurique.
